# EUROPÄISCHE PATENTSCHRIFT

(11) **EP 2 805 040 B1**
(45) Veröffentlichungstag und Bekanntmachung des Hinweises auf die Patenterteilung: **20.09.2017**
(21) Anmeldenummer: 12794254.8
(22) Anmeldetag: 21.11.2012
(51) Int. Cl.: F02M 25/08, F02B 37/16, B60K 15/035

(54) **TANKENTLÜFTUNGSSYSTEM MIT BYPASSVENTIL**
FUEL VAPOUR RECOVERY SYSTEM WITH BYPASS VALVE
SYSTÈME DE RÉCUPERATION DES VAPEURS DE CARBURANT AVEC SOUPAPE DE DÉRIVATION

(30) Priorität: 17.01.2012 DE 102012200583
(43) Veröffentlichungstag der Anmeldung: 26.11.2014
(73) Patentinhaber: Bayerische Motoren Werke Aktiengesellschaft, 80809 München (DE)
(72) Erfinder: BENTENRIEDER, Andreas, 85586 Poing (DE); RAMATSCHI, Stephan, 85604 Pöring (DE)
(86) Internationale Anmeldenummer: PCT/EP2012/073229
(87) Internationale Veröffentlichungsnummer: WO 2013/107543

(56) Entgegenhaltungen:
- WO-A1-2006/013006
- DE-A1- 19 857 924
- DE-A1-102008 039 300
- DE-A1-102009 009 897
- DE-A1-102010 044 526
- US-A1- 2010 012 099

## Beschreibung

Die Erfindung betrifft ein Tankentlüftungssystem für eine Brennkraftmaschine, insbesondere für ein Kraftfahrzeug, mit einem in einem Zuluftkanal angeordnetem Verdichter und einem Bypass um den Verdichter, der mit einem Kraftstoffsystem in Verbindung steht, wobei in dem Bypass ein die Luftdurchströmungsmenge steuerndes Ventil angeordnet ist.

Aus dem Stand der Technik ist bekannt, zur Erfüllung der gesetzlichen Anforderungen zur Verdampfungsemission die aus dem Tank durch die Tankentlüftung austretenden gasförmigen Kohlenwasserstoffe durch einen Aktivkohlefilter (AKF) abzuscheiden. Hierbei ist üblich, dass der Tank über eine Entlüftungsleitung mit dem Aktivkohlefilter verbunden ist und die aus dem Tank austretenden, mit Kohlenwasserstoffen beladenen Gase durch die Entlüftungsleitung zur Abscheidung durch den Aktivkohlefilter geführt werden. Der Filter muss regelmäßig mit Luft gespült werden, um eine Überladung des AKF mit Kohlenwasserstoffen zu verhindern. Hier wird bei herkömmlichen Motoren die Druckdifferenz zwischen Saugrohr (hinter der Drosselklappe) und der Atmosphäre genutzt, um einen Teilstrom der Ansaugluft durch den Aktivkohlefilter zu saugen. Bei aufgeladenen Motoren ist bekannt, zusätzlich einen Bypass um den Verdichter vorzusehen, in dem mittels einer Venturidüse ein Unterdruck erzeugt wird, der zur Ansaugung der im Aktivkohlefilter gesammelten Kohlenwasserstoffe genutzt wird, um diese der Verbrennung zuzuführen.

Aufgrund der Entwicklung, die Verbrennungsmotoren mit immer geringeren Hubräumen bei gleichbleibenden oder steigendem Fahrzeuggewichten auszuführen, deren Leistungen gleichzeitig durch Aufladung erhöht wird (Downsizing), reichen die mit dem herkömmlichen Verfahren erzielten Spülluftmengen für den Aktivkohlefilter, wenn gleichzeitig der Wirkungsgrad der Aufladung und des Motors beibehalten werden soll, nicht aus. Die in dem Bypass um den Verdichter verwendete Venturidüse zur Erzeugung des Unterdrucks und der damit einhergehenden Spülluft für den Aktivkohlefilter müssen entsprechend größer dimensioniert werden, um die erforderliche Spülluftmenge bereitzustellen. Hierbei ist jedoch nachteilig, dass mit einer Vergrößerung der durch den Bypass von der Hochdruckseite in Strömungsrichtung nach dem Lader zur Niederdruckseite vor dem Lader die gerade verdichtete Zuluft nicht dem Motor zugeführt, sondern durch den Bypass zurückgeführt wird. Dies verringert den Wirkungsgrad.

Alternativ kann vorgesehen werden, für eine zweite geschaltete Einleitstelle ein elektrisches oder magnetisches Ventil zu verwenden, jedoch sind derartige Komponenten schwer und brauchen einen großen Bauraum. Zudem ist die Ansteuerung über das Motorsteuergerät notwendig, wofür ein Steckeranschluss, ein neuer Ast am Kabelbaum, ein Layer-Vorhalt im Steuergerät, eine Endstufe und ein Pin benötigt werden.

Weiterer Stand der Technik zu Tankentlüftungsanlagen, teilweise auch mit Bypass um den Zuluftkanal zur Steuerung eines Ventils, wird durch die Patentanmeldungen DE 198 57 924 A1, US 2010/012099 A1, DE 10 2010 044526A1 sowie DE 10 2009 009897 A1 geboten.

Vordiesem Hintergrund ist es Aufgabe der Erfindung, die bekannten Tankentlüftungssysteme dahingehend zu verbessern, dass bei aufgeladenen Verbrennungsmotoren mit großem Nutzanteil im aufgeladenen Betrieb ausreichende Spülluftmengen für den Filter des Tankentlüftungssystems ermöglicht werden, da im aufgeladenen Betrieb kein Unterdruck zum Spülen in der Sauganlage zur Verfügung steht.

Diese Aufgabe wird mit einem Tankentlüftungssystem gemäß dem Anspruch 1 erfüllt, das einen in einem Zuluftkanal angeordneten Verdichter und einen Bypass um den Verdichter aufweist, der mit einem Kraftstoffsystem in Verbindung steht, wobei in dem Bypass ein Ventil angeordnet ist, das eine den Bypass durchströmende Luftmasse lastabhängig, d.h. in Abhängigkeit der jeweiligen Last der Brennkraftmaschine, steuert, wobei in dem Bypass eine Venturidüse zur Erzeugung eines Unterdrucks vorgesehen ist. Als Kraftstoffsystem ist hierbei der Tank mit angeschlossenem Aktivkohlefilter zur Adsorption der gasförmigen Kohlenwasserstoffe zu verstehen.

Die "lastabhängige" Steuerung des Ventils wird vorliegend als Oberbegriff für das durch die Brennkraftmaschine bereitgestellte Drehmoment bzw. die der Brennkraftmaschine zugeführte Luftmasse oder den Umgebungsdruck im Zuluftkanal verstanden.

Grundsätzlich kann bei der zusätzlichen Verwendung eines erfindungsgemäßen Ventils die in dem Bypass angeordnete Venturidüse größer ausgebildet werden, um die durch den Unterdruck erzeugte Spülluftmenge absolut zu vergrößern. Um gleichzeitig den Strömungsverlust über den Bypass regulieren zu können, sieht die Erfindung vor, das Ventil lastabhängig zu steuern. In einer günstigen Ausführung erfolgt die Steuerung des Ventils in Abhängigkeit des Umgebungsdrucks im Zuluftkanal, beispielsweise unter Verwendung des Druckunterschieds in Strömungsrichtung vor und nach dem Verdichter oder vor und nach der Drosselklappe.

Das erfindungsgemäße Ventil ist in einer ebenfalls vorteilhaften Ausführung selbstregelnd ausgebildet, ohne dass es einer elektrischen Steuerung oder Bestromung bedarf.

In einer günstigen Ausführung der Erfindung ist dem Verdichter nachgeschaltet im Zuluftkanal eine Drosselklappe angeordnet, die innerhalb des Zuluftkanals einen ersten Umgebungsdruck in Strömungsrichtung vor der Drosselklappe und einen zweiten Umgebungsdruck in Strömungsrichtung nach der Drosselklappe erzeugt, wobei der Differenzdruck die das Ventil durchströmende Luftmasse steuert. Der Differenzdruck ist hierbei unmittelbar abhängig von der Drosselklappenstellung und kann sich bei vollständig geöffneter Drosselklappenstellung dem Wert 0 annähern, sodass der Druck vor und nach der Drosselklappe identisch ist.

Das Ventil weist hierzu in einer bevorzugten Ausführung einen ersten Anschluss an den ersten Umgebungsdruck in Strömungsrichtung vor der Drosselklappe und/ oder einen zweiten Anschluss an den zweiten Umgebungsdruck nach der Drosselklappe auf, sodass das höhere Druckniveau vor der Drosselklappe und das niedrigere Druckniveau nach der Drosselklappe in dem Ventil eine Einstellung der maximalen Durchströmungsluftmasse durch den Bypass und das Ventil bewirken können.

In einer bevorzugten Ausführung der Erfindung weist das Ventil in einem Gehäuse hierfür einen bewegbaren Kolben mit mindestens einem Durchströmungsdurchlass in Strömungsrichtung des Bypasses auf. Der durchströmbare Querschnitt des mindestens einen Strömungsdurchlasses ist an die jeweilige Anforderung hinsichtlich der notwendigen Spülluftmenge und Motorgröße anpassbar.

In einer günstigen Ausführung ist der mindestens eine Strömungsdurchlass derart ausgebildet, dass er einen in Strömungsrichtung durch Einlaufverrundungen strömungsoptimierten Querschnitt aufweist.

Der in dem Ventil angeordnete Kolben ist derart verschieblich, dass der mindestens eine Strömungsquerschnitt von einer axial mittigen Position des Bypasses bis zu einer Position verssetzbar ist, in der der mindestens eine Strömungsquerschnitt vollständig von dem Gehäuse verschlossen ist. Hierfür ist in einer möglichen Ausführungsform gemäß der Erfindung in dem Ventil eine Feder angeordnet, die in Wirkverbindung mit dem Kolben steht. In einer kostengünstigen Ausführung ist die Feder zwischen dem Gehäuse des Ventils und der Kolbenunterseite angeordnet und kann den Kolben, soweit keine äußeren Einflüsse vorliegen, innerhalb des Ventils derart versetzen, dass die Strömungsdurchlässe von der Gehäusewand des Ventils verschlossen sind. Alternativ kann eine Feder mit Federkennrate vorgesehen sein, bei welcher der mindestens eine Strömungsdurchlass stets zu einem vorbestimmten Maß offen bleibt.

Die Position des Kolbens und somit des mindestens einen Strömungsdurchlasses ist durch die Federkennrate der Feder und über die Anschlüsse auf den Kolben einwirkenden Drücke steuerbar. Für den Betrieb ist vorzugsweise vorgesehen, dass unter Volllast, d.h. bei vollständig geöffneter Drosselklappe und somit im Wesentlichen gleichen Umgebungsdrücken vor und nach der Drosselklappe, ausschließlich die Feder auf den Kolben wirkt und diesen um eine vorbestimmte Länge versetzt, sodass der mindestens eine Strömungsdurchlass vollständig oder fast vollständig geschlossen ist, was wiederum zu einer vollständigen oder fast vollständigen Schließung des Bypasses führt. Die Druckdifferenz wirkt über die Anschlüsse des Ventils derart auf den Kolben ein, dass ein höheres Druckniveau vor der Drosselklappe und kumulativ oder alternativ das niedrigere Druckniveau nach der Drosselklappe über den entsprechenden Anschluss am Ventil der Federkraft entgegenwirkt, und somit den Kolben versetzt und den mindestens einen Strömungsdurchlass für ein vorbestimmtes Maß öffnet. Hierbei kann auch vorgesehen sein, eine Vielzahl von Strömungsdurchlässen in dem Kolben anzuordnen, wobei die den Kolben durchströmbare Luftmasse über die Anzahl der im Strömungsweg verbleibenden Durchgänge definiert werden kann.

Alternativ zu dem selbstregelnden Differenzdruck-gesteuerten Ventil kann selbstverständlich ein elektronisch gesteuertes Ventil verwendet werden, wobei dieses nicht die Vorteile umfasst, dass eine Steuerung ohne Aktuator erzielbar, kein Anschluss an den Kabelbaum notwendig und keine Pin-Belegung im Steuergerät vorzusehen ist. Ferner baut das selbstregelnde Druckdifferenzgesteuerte Ventil sehr kompakt und damit sehr leicht.

Bei Verwendung eines elektrisch gesteuerten Ventils erfolgt die lastabhängige Steuerung beispielsweise in Abhängigkeit eines Wertes des Motorkennfelds (z.B. aktuelles Drehmoment) oder die der Brennkraftmaschine zugeführte Luftmasse, die über einen Luftmassenmesser festgestellt wird. Die Öffnungsstellung des Ventils kann somit elektronisch unmittelbar an vordefinierte Betriebszustände der Brennkraftmaschine angepasst werden.

Durch die Reduzierung bzw. bei geschlossenem Ventil vollständige Vermeidung eines Leckagestroms über den Bypass wird ferner ein schnelles Motoransprechverhalten erzielt. Die Steuerung der durch das Ventil zu strömenden Luftmasse ist über die Druckverhältnisse und die Federkennrate ermöglicht. Somit wird eine bedarfsgerechte, indirekte Ansteuerung über die Druckdifferenz beispielsweise an der Drosselklappe realisiert.

Weitere Vorteile der Erfindung werden nachstehend in der Beschreibung eines bevorzugten Ausführungsbeispiels näher dargestellt. Es zeigen:
Fig. 1 eine schematische Darstellung der Tankentlüftung;
Fig.2 eine schematische Darstellung des im Bypass angeordneten Ventils in einer vollständig geöffneten Stellung;
Fig.3. eine schematische Darstellung des im Bypass angeordneten Ventils in einer geschlossenen Stellung.

Die Darstellung in den beigefügten Figuren erfolgt beispielhaft schematisch. In den Figuren sind jeweils gleiche Bauteile mit gleichen Bezugszeichen versehen. Ferner sind nur die für das Verständnis der Erfindung wesentlichen Elemente dargestellt.

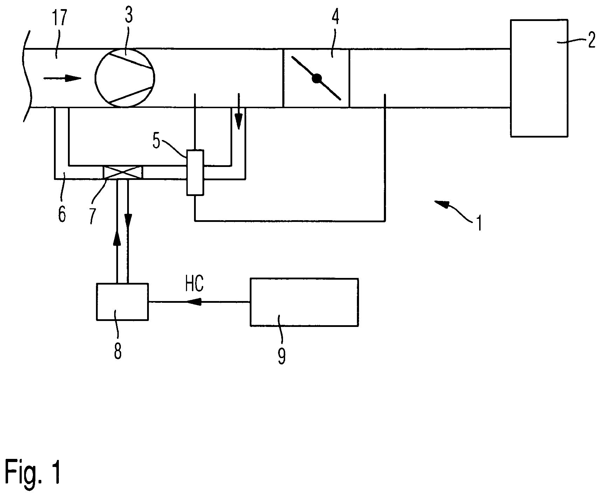

In Figur 1 ist das erfindungsgemäße Tankentlüftungssystem für eine Brennkraftmaschine, insbesondere für Kraftfahrzeuge, schematisch dargestellt, wobei in dem Zuluftkanal 17 zu dem Verbrennungsmotor 2 in Reihe ein Verdichter 3 und eine Drosselklappe 4 angeordnet sind. Der Zuluftkanal 17 weist um den Verdichter 3 einen Bypass 6 auf, in dem eine Venturidüse 7 angeordnet ist. Durch den durch die Venturidüse 7 erzeugten Unterdruck wird ein Spülluftpfad zu dem Kraftstoffsystem bereitgestellt, bei dem ein Filter 8 (Aktivkohlefilter, AKF) die mit Kohlenwasserstoffen beladenen Gase adsorbiert. Die Spülluft nimmt die Kohlenwasserstoffe des Filters 8 auf und führt sie der Verbrennungsluft zu.

Um eine ausreichende Spülluftmenge zu gewährleisten muss bei immer kleiner werdenden Motoren 2 die Größe des Bypasses 6 und des darin angeordneten Venturis 7 angepasst werden. Durch die Vergrößerung des Venturis 7 kann zwar die notwendige Spülluftmenge erreicht werden, gleichzeitig wird jedoch eine unerwünscht große Menge der gerade von dem Verdichter 3 verdichteten Zuluft über den Bypass 6 zurückgeführt. Es ist deshalb vorgesehen, innerhalb des Bypasses 6 ein Ventil 5 anzuordnen, dass eine den Bypass 6 durchströmende Luftmasse in Abhängigkeit des Umgebungsdrucks des Zuluftkanals 17 steuert. Der Umgebungsdruck im Zuluftkanal 17 ist hierbei in einen ersten Umgebungsdruck in Strömungsrichtung vor der Drosselklappe 4 und eine zweiten Umgebungsdruck in Strömungsrichtung nach der Drosselklappe 4 bestimmt, wobei der Differenzdruck zwischen dem ersten und dem zweiten Umgebungsdruck die das Ventil 5 durchströmende Luftmasse steuert. Zur Überprüfung der durchströmten Luftmasse kann zusätzlich ein nicht dargestellter Luftmassenmesser innerhalb des Bypasses 6 vorgesehen sein.

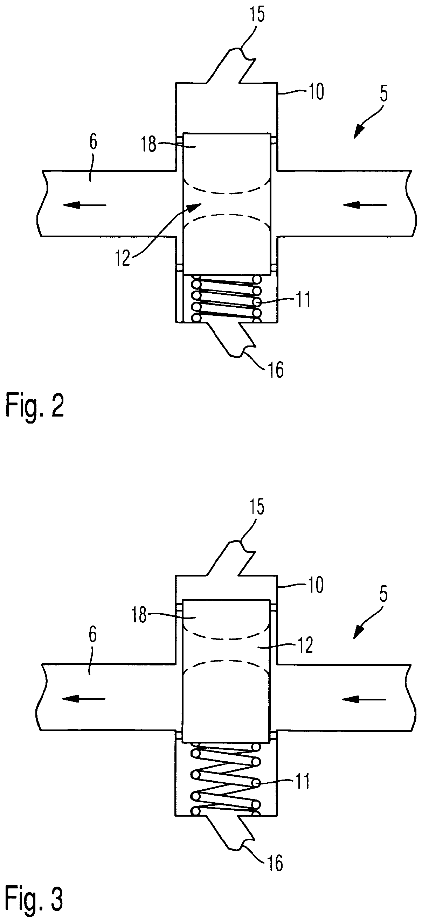

Figur 2 zeigt das erfindungsgemäße Ventil aus Figur 1 in einer geöffneten Stellung. Das Ventil 5 weist ein Gehäuse 10 auf, das an dem Bypass 6 angeordnet oder in diesen integriert ist. Innerhalb des Gehäuses 10 ist ein Kolben 18 angeordnet, der in seinem Zentralbereich einen Strömungsdurchlass 12 aufweist, der sich in der gezeigten Darstellung im Wesentlichen in Richtung der Achse des Bypasses 6 erstreckt. Der Strömungsdurchlass 12 weist einen in Strömungsrichtung mit Einlaufverrundungen versehenen Querschnitt auf. In Wirkverbindung zwischen dem Gehäuse 10 und dem Kolben 18 ist eine Feder 11 angeordnet, die den Kolben 18 in vertikaler Richtung verschieben kann. Soweit keine weiteren Einflüsse auf den Kolben 18 einwirken, verschiebt die Feder den Kolben in eine Position gemäß Figur 2, sodass das Ventil 5 geschlossen wird. An dem Gehäuse 10 sind ein erster Anschluss 15 und ein zweiter Anschluss 16 vorgesehen, wobei der zweite Anschluss 16 der Seite der Feder 11 und der erster Anschluss 15 auf der gegenüberliegenden Seite des Kolbens 18 vorgesehen sind. Das Ventil 5 ist über den zweiten Anschluss 16 mit dem niedrigeren Druckniveau im Zuluftkanal 17 in Strömungsrichtung nach der Drosselklappe 4 verbunden. Der erste Anschluss 15 ist mit dem höheren Druckniveau im Zuluftkanal 17 in Strömungsrichtung vor der Drosselklappe 4 verbunden. Soweit die Drosselklappe 4 nicht vollständig geöffnet ist (Volllast) wirkt der Differenzdruck über die Anschlüsse 15, 16 auf den Kolben 18, wobei das niedrigere Druckniveau vor der Drosselklappe 4 die Federkraft der Feder 11 ansaugend (anziehend), das höhere Druckniveau nach der Drosselklappe 4 über den Anschluss 16 die Federkraft der Feder 11 drückend unterstützt.

Figur 3 zeigt das Ventil 5 aus den Figuren 1 und 2 in geschlossener Stellung, wobei der Differenzdruck vor und nach der Drosselklappe in dem Zuluftkanal 17 sich dem Wert 0 annähert, da die Drosselklappe unter Volllast keine oder eine vernachlässigbare Stauung bewirkt. Auf den Kolben 18 des Ventils 5 wirkt somit praktisch ausschließlich die Federkraft der Feder 11. Der Strömungsdurchlass 12 ist in diesem Zustand derart versetzt, dass er von dem Gehäuse 10 des Ventils 5 vollständig oder fast vollständig überdeckt wird, sodass der Bypass 6 verschlossen werden kann. Über die Federkennrate und die bedarfsgerechte, indirekte Ansteuerung über die Druckdifferenz kann der Kolben 18 auf eine vorbestimmte Weise innerhalb des Gehäuses 10 versetzt werden. Es sind somit Auslegungen möglich, bei denen der Bypass 6 vollständig verschlossen wird. Gleichwohl sind auch Ausführungen von der Erfindung umfasst, bei denen auch unter Volllast ein vorbestimmter Strömungsquerschnitt 12 durchströmbar verbleibt. Als alternative Ausführung zu dem gezeigten einfachen Strömungsdurchlass 12 können hierzu mehrere Strömungsdurchlässe vorgesehen sein, wobei durch die Bewegung des Kolbens 18 eine vorbestimmte Anzahl der Strömungsdurchlässe abgedeckt werden kann und somit die Begrenzung des Durchflusses im Bypass 6 erzielbar wird.

## Patentansprüche

1. Tankentlüftungssystem für eine Brennkraftmaschine mit einem in einem Zuluftkanal (17) angeordneten Verdichter (3) und einem Bypass (6) um den Verdichter (3), der mit einem Kraftstoffsystem (8, 9) in Verbindung steht, wobei in dem Bypass (6) ein Ventil (5) angeordnet ist, das eine den Bypass (6) durchströmende Luftmasse lastabhängig steuert, wobei in dem Bypass (6) eine Venturidüse (7) zur Erzeugung eines Unterdrucks vorgesehen ist.

2. Tankentlüftungssystem nach Anspruch 1, **dadurch gekennzeichnet, dass** das Ventil (5) selbstregelnd ist.

3. Tankentlüftungssystem nach zumindest einem der Ansprüche 1 bis 2, **dadurch gekennzeichnet, dass** in dem Zuluftkanal (17) eine Drosselklappe (4) angeordnet ist, die in dem Zuluftkanal (17) einen ersten Umgebungsdruck in Strömungsrichtung vor der Drosselklappe (4) und einen zweiten Umgebungsdruck in Strömungsrichtung nach der Drosselklappe (4) erzeugt, wobei der Differenzdruck die das Ventil (5) durchströmende Luftmasse steuert.

4. Tankentlüftungssystem nach zumindest einem der Ansprüche 1 oder 3, **dadurch gekennzeichnet, dass** das Ventil (5) elektrisch über einen Kennfeldwert der Brennkraftmaschine oder die der Brennkraftmaschine zugeführte Luftmasse gesteuert ist.

5. Tankentlüftungssystem nach zumindest einem der Ansprüche 1 bis 4, **dadurch gekennzeichnet, dass** das Ventil (5) einen ersten Anschluss (15) an den ersten Umgebungsdruck und/oder einen zweiten Anschluss (16) an den zweiten Umgebungsdruck aufweist.

6. Tankentlüftungssystem nach zumindest einem der Ansprüche 1 bis 5, **dadurch gekennzeichnet, dass** das Ventil (5) einen in einem Gehäuse (10) bewegbaren Kolben (18) mit mindestens einem Strömungsdurchlass (12) aufweist.

7. Tankentlüftungssystem nach Anspruch 6, **dadurch gekennzeichnet, dass** der mindestens eine Strömungsdurchlass (12) einen in Strömungsrichtung mit einer Einlaufverrundung versehenen Querschnitt aufweist.

8. Tankentlüftungssystem nach Anspruch 6 und/oder 7, **dadurch gekennzeichnet, dass** das Ventil (5) eine Feder (11) aufweist, die in Wirkverbindung mit dem Kolben (18) steht.

9. Tankentlüftungssystem nach Anspruch 8, **dadurch gekennzeichnet, dass** die Position des Kolbens (18) und des mindestens einen Strömungsdurchlasses (12) durch die Feder (11) und die Höhe des ersten und zweiten Umgebungsdrucks steuerbar ist.

10. Tankentlüftungssystem nach zumindest einem der Ansprüche 1 bis 9, **dadurch gekennzeichnet, dass** Kraftstoffsystem einen Filter (8) umfasst, der mit dem Bypass (6) in Verbindung steht und im Bypass (6) ein Unterdruck zur Luftspülung des Filters (8) erzeugt wird.

## Claims

1. An evaporative emission control system for an internal combustion engine with a compressor (3) arranged in an air intake duct (17) and with a bypass (6) around the compressor (3) which communicates with a fuel system (8, 9), wherein a valve (5) is arranged in the bypass (6), which valve in load-dependent manner controls an air mass flowing through the bypass (6), wherein a venturi nozzle (7) for generating a partial vacuum is provided in the bypass (6).

2. An evaporative emission control system according to Claim 1, **characterised in that** the valve (5) is self-regulating.

3. An evaporative emission control system according to at least one of Claims 1 to 2, **characterised in that** a throttle valve (4) is arranged in the air intake duct (17), which valve generates a first ambient pressure in the direction of flow before the throttle valve (4) and a second ambient pressure in the direction of flow after the throttle valve (4) in the air intake duct (17), the differential pressure controlling the air mass flowing through the valve (5).

4. An evaporative emission control system according to at least one of Claims 1 or 3, **characterised in that** the valve (5) is controlled electrically via a map value of the internal combustion engine or the air mass supplied to the internal combustion engine.

5. An evaporative emission control system according to at least one of Claims 1 to 4, **characterised in that** the valve (5) has a first connection (15) to the first ambient pressure and/or a second connection (16) to the second ambient pressure.

6. An evaporative emission control system according to at least one of Claims 1 to 5, **characterised in that** the valve (5) has a piston (18), which is movable in a housing (10), with at least one flow passage (12).

7. An evaporative emission control system according to Claim 6, **characterised in that** the at least one flow passage (12) has a cross-section provided in the direction of flow with a rounded entry portion.

8. An evaporative emission control system according to Claim 6 and/or 7, **characterised in that** the valve (5) has a spring (11) which is in an operative connection with the piston (18).

9. An evaporative emission control system according to Claim 8, **characterised in that** the position of the piston (18) and of the at least one flow passage (12) can be controlled by the spring (11) and the level of the first and second ambient pressure.

10. An evaporative emission control system according to at least one of Claims 1 to 9, **characterised in that** the fuel system comprises a filter (8) which is connected to the bypass (6), and a partial vacuum for flushing the filter (8) with air is generated in the bypass (6).

## Revendications

1. Système de ventilation de réservoir de moteur à combustion interne comportant un compresseur (3) associé à un canal d'alimentation en air (17) et une dérivation (6) autour du compresseur (3) qui est reliée à un système de carburant (8, 9), la dérivation (6) ayant une soupape (5) commandant la masse d'air traversant la dérivation (6), ayant un venturi (7) pour générer une dépression.

2. Système de ventilation de réservoir selon la revendication 1, **caractérisé en ce que**
la soupape (5) est autorégulatrice.

3. Système de ventilation de réservoir selon l'une des revendications 1 et 2,
**caractérisé en ce que**
le canal d'alimentation en air (17) comporte un volet d'étranglement (4) qui génère dans le canal d'alimentation en air (17), une première pression de contournement en amont du volet d'étranglement (4) dans le sens de passage et une seconde pression de contournement en aval du volet d'étranglement (4) selon le sens de passage, la différence des pressions commandant la masse d'air traversant la soupape (5).

4. Système de ventilation de réservoir selon l'une des revendications 1 ou 3,
**caractérisé en ce que**
la soupape (5) est commandée électriquement à partir d'une valeur d'un champ de caractéristiques du moteur à combustion interne ou de la masse d'air alimentant le moteur à combustion interne.

5. Système de ventilation de réservoir selon au moins l'une des revendications 1 à 4,
**caractérisé en ce que**
la soupape (5) comporte un premier branchement (15) à une première pression ambiante et/ou un second branchement (16) à une seconde pression ambiante.

6. Système de ventilation de réservoir selon au moins l'une des revendications 1 à 5,
**caractérisé en ce que**
la soupape (5) a un piston (18) mobile dans un boîtier (10) et ayant au moins un passage (12).

7. Système de ventilation de réservoir selon la revendication 6, **caractérisé en ce que**
le passage (12) a une section munie d'un arrondi d'entrée dans le sens de passage.

8. Système de ventilation de réservoir selon la revendication 6 et/ou 7, **caractérisé en ce que**
la soupape (5) comporte un ressort (11) qui coopère avec le piston (18).

9. Système de ventilation de réservoir selon la revendication 8, **caractérisé en ce que**
la position du piston (18) et d'au moins un passage (12) sont commandés par le ressort (11) et par le niveau de la première et/ ou seconde pression ambiante.

10. Système de ventilation de réservoir selon au moins l'une des revendications 1 à 9,
**caractérisé en ce que**
le système de carburant comporte un filtre (8) communiquant avec la dérivation (6) et on génère dans la dérivation (6) une dépression pour le rinçage par de l'air du filtre (8).
